# FASCICULE DE BREVET EUROPEEN

(11) **EP 0 424 520 B1**
(45) Date de publication et mention de la délivrance du brevet: **12.10.1994**
(21) Numéro de dépôt: 90908244.8
(22) Date de dépôt: 11.05.1990
(51) Int. Cl.: G02B 5/18, G02C 7/06, G03F 7/00

(54) **PROCEDE DE FABRICATION D'UNE LENTILLE EN POLYMERE TRANSPARENT A INDICE DE REFRACTION MODULE**
HERSTELLUNGSVERFAHREN FÜR EINE TRANSPARENTE POLYMERLINSE MIT MODULIERTEM BRECHUNGSINDEX
METHOD FOR FABRICATING A TRANSPARENT POLYMER LENS WITH MODULATED REFRACTION INDEX

(30) Priorité: 12.05.1989 FR 8906323
(43) Date de publication de la demande: 02.05.1991
(73) Titulaire: ESSILOR INTERNATIONAL (Compagnie Générale d'Optique), F-94220 Charenton-le-Pont (FR)
(72) Inventeur: BAUDE, Dominique, F-93400 Saint-Ouen (FR); MESLARD, Jean-Claude, F-94410 Saint-Maurice (FR); TABOURY, Jean, F-92230 Sceaux (FR); CHAVEL, Pierre, F-91380 Chilly-Mazarin (FR); JOYEUX, Denis, F-91940 Les Ulis (FR); LOUGNOT, Daniel, F-68200 Mulhouse (FR)
(74) Mandataire: Thibon-Littaye, Annick
(86) Numéro de dépôt international: FR9000338
(87) Numéro de publication internationale: WO9013832

## Description

La présente invention concerne les techniques qui permettent de modifier les propriétés optiques d'un polymère transparent, plus particulièrement quand on cherche à moduler l'indice de réfraction d'un article semi-fini en matière organique transparente préalablement polymérisée et mise en forme, sans modifier sensiblement sa géométrie ou son état de surface.

Dans ces conditions, une application privilégiée de l'invention concerne la fabrication des lentilles optiques artificielles de correction de la vue telles que les lentilles de contact et les implants oculaires, étant donné que dans ces exemples, la préservation d'une forme géométrique déterminée a une grande importance, de même que celle de qualités de surface assurant sur les deux faces de la lentille, la compatibilité biologique avec le milieu oculaire et l'absence d'irritation de l'oeil.

Le propre de telles lentilles est qu'elles sont d'une part de faibles dimensions et destinées à être utilisées en pleine ouverture, par distinction avec les verres de lunettes, d'autre part qu'elles doivent présenter une forme géométrique prédéterminée, qui par exemple, pour une lentille cornéenne, sera adaptée à la morphologie de l'oeil qui la reçoit, ou qui procurera une puissance d'accommodation de base pour un implant de remplacement du cristallin.

Dans ce genre de lentilles, la modulation d'indice de réfraction visée par l'invention peut avoir notamment pour but de créer un réseau diffractif apportant la bifocalité à une lentille de contact ou un implant pour presbyte. Ceci permet, par exemple pour une lentille de contact, de corriger la vision de près de l'utilisateur, avec une puissance qui est déterminée par cet élément, alors que la correction de la vision de loin est réglée indépendamment par la géométrie de la lentille.

On sait actuellement réaliser des lentilles de contact à élément diffractif par modulation du relief de la face externe ou interne de la lentille. On peut obtenir cette modulation par une technique d'usinage, en gravant le matériau de la lentille au pas désiré pour former le réseau diffractif. Outre l'emploi d'un équipement coûteux et d'entretien délicat, cette technique a l'inconvénient d'être réservée aux lentilles de contact de type rigide. Quant au moulage de la lentille directement avec le relief souhaité, il demande au préalable l'élaboration d'un moule dont l'usinage est tout aussi coûteux et délicat et dont l'utilisation est brève.

Dans un cas comme dans l'autre, les lentilles obtenues ne donnent pas satisfaction. Après quelque temps de port de la lentille, on observe un encrassement de l'élément diffractif. Ce phénomène est particulièrement prononcé lorsque l'élément diffractif est réalisé sur la face interne de la lentille. Par ailleurs, dans les lentilles commercialisées de ce type et pour des raisons d'adaptation, la courbure de la face interne de la lentille a été accrue afin de minimiser la surface de contact entre la face gravée de la lentille et la cornée, ce qui augmente par là même l'épaisseur du film de larme et crée ainsi un effet de lentille additionnelle dont les caractéristiques optiques ne sont pas fixes dans le temps, en raison de l'instabilité de ce film de larme.

Une autre méthode connue pour réaliser des lentilles de contact à élément diffractif consiste, comme il est décrit dans le brevet européen 0 064 812, à appliquer sur la lentille une couche de gélatine sensibilisée à la lumière par bichromatation, qui est ensuite impressionnée de manière à y former un réseau diffractif. Il est prévu en variante que la couche de gélatine puisse être incluse à l'intérieur de la lentille, en couche intermédiaire, afin d'éviter un contact direct avec l'oeil, le bichromate étant connu comme un composé irritant. Mais cette solution ne semble guère pouvoir être adoptée en pratique industrielle.

Or quand elle est située sur la face externe de la lentille, la couche de gélatine pose des problèmes liés à une adhérence insuffisante avec le substrat constitué par le matériau de la lentille elle-même. Elle risque de ce fait d'être détériorée par les mouvements de la paupière et, en outre, de se trouver soumise à des variations de son degré d'hydratation par le milieu oculaire, donc à des variations de gonflement qui entraînent une instabilité des propriétés optiques de l'élément diffractif.

On sait aussi qu'il existe d'autres procédés pour réaliser des réseaux diffractifs sur des supports rigides, par modulation en épaisseur et indice de réfraction de films transparents appliqués sur ces supports, en provoquant une photo-polymérisation locale d'un monomère incorporé à un prépolymère. On a proposé des procédés de ce type pour réaliser des films guides d'ondes ou des hologrammes.

S'agissant alors de films minces et plats contrairement à la présente invention, les procédés connus impliquent de déposer sur un support rigide une composition liquide comprenant le polymère de base en solution avec le monomère photo-polymérisable, ainsi qu'un photo-initiateur capable de provoquer la polymérisation de ce monomère sous irradiation. On fait ensuite durcir le dépôt en l'exposant à une source d'irradiation modulée en intensité, en puissance ou temps d'exposition, ou à travers un masque de forme appropriée, après quoi on élimine les constituants non durcis, provenant en particulier des zones du film qui n'ont pas été irradiées. Le défaut de stabilité dans le temps des modulations d'indice ainsi obtenues a conduit parfois à préconiser en outre une réaction chimique permettant de fixer le monomère sur le polymère pour éviter une diffusion trop facile détruisant les modulations d'indice. Dans le même but, on a aussi utilisé des supports en verre de silice poreux (US-A-4173475 ou "Latent Imaging Photopolymer systems", E.A. Chandross et al., "Applied Optics" Vol.17, No.4, 15 février 1978, pages 566-573).

Quand on cherche à appliquer ces techniques au domaine des lentilles optiques, il est naturellement impératif que les modulations d'indice réalisées restent stables dans le temps et soient insensibles au milieu oculaire. De plus il se pose un autre problème qui n'existe pas dans le cas des films antérieurs, ce problème étant lié au besoin de respecter une géométrie déterminée pour la lentille.

De fait, les techniques de sérigraphie par photosensibilisation appliquées dans cet art antérieur ne sont en aucun cas directement transposables à la modulation d'indice d'un polymère à utiliser en lentille optique artificielle dans l'oeil, dans la mesure où elles n'avaient pas à se prêter aux mêmes exigences de stabilité géométrique et de qualité et biocompatibilité de toute leur surface.

Et quand certains, corrme les auteurs du brevet américain US 4 778 256, ont cherché à traiter des objets, et non plus des films sur support, il s'agissait d'une variation en profondeur, et non parallèlement à la surface comme le demandent les lentilles visées par la présente invention. De plus les objets traités étaient dans ce cas également en verre de silice poreux, et non en polymère organique.

Pour remédier aux inconvénients des techniques antérieures, la présente invention vise essentiellement à former un élément diffractif ou tout autre type de modulation d'indice au sein même du matériau constitutif de la lentille, celui-ci étant de type organique. Elle permet de manière générale de traiter ainsi des polymères sous forme d'articles semi-finis, hors tout support, en répondant aux exigences des lentilles optiques artificielles à usage ophtalmique.

L'invention vise également à proposer des combinaisons de polymères, monomères et photoinitiateurs particulièrement appropriés à l'application aux lentilles optiques artificielles en matériau organique.

En vue de satisfaire à ces différents objectifs l'invention propose un procédé de fabrication d'une lentille optique à modulation d'indice de réfraction, dans lequel :
- on imprègne une matrice en un matériau polymère préformée par polymérisation dudit matériau au moyen d'une composition liquide photopolymérisable comportant un monomère et un photoinitiateur de polymérisation sous irradiation ;
- on soumet le matériau ainsi imprégné à une irradiation locale variable en puissance et/ou temps d'exposition, pour polymériser ladite composition localement suivant la modulation à obtenir,
- puis on élimine du matériau l'excès de composition non polymérisée.

Par distinction avec les techniques connues de création d'hologrammes, le procédé selon l'invention part donc, dans sa première étape, d'un polymère déjà entièrement durci, de préférence dans sa forme définitive, qui est ensuite imprégné dans sa masse de la composition photopolymérisable destinée à créer l'élément diffractif.

L'invention est de ce fait particulièrement adaptée à la fabrication d'articles transparents à élément diffractif fonctionnant par transmission, ce qui est le cas des lentilles optiques artificielles utilisées en ophtalmologie, comme lentilles de contact ou comme implants. L'élément diffractif peut alors avantageusement être réalisé à partir d'un monomère dit optique, c'est-à-dire engendrant un polymère à qualités optiques, également biocompatible, de même que le polymère du matériau de base.

Les matériaux constitutifs de lentilles optiques artificielles les plus appropriés pour la mise en oeuvre de l'invention sont choisis parmi les polymères, y compris les copolymères, qui sont obtenus à partir de compositions comprenant au moins un monomère choisi parmi les monomères suivants : les acrylates d'alkyle, les méthacrylates d'alkyle, préférentiellement le méthacrylate de méthyle (MMA), les lactames insaturés, préférentiellement la N-vinylpyrrolidone (NVP), les acrylates ou méthacrylates d'hydroxyalkyle, en particulier le méthacrylate d'hydroxyéthyle (HEMA) et le méthacrylate de di-hydroxy-2,3 propyle, l'acide méthacrylique ou l'acide acrylique.

Dans le cadre de l'invention, on utilise préférentiellement les lentilles de contact dont le matériau constitutif est obtenu par polymérisation de monomères ou de compositions de polymère des monomères suivants : MMA, HEMA, MMA/NVP, HEMA/NVP. L'invention s'applique avec le plus d'intérêt aux polymères qui présentent un réseau réticulé, les réactions de polymérisation et réticulation étant complètement terminées avant le traitement de modulation d'indice. Par ailleurs, le procédé de l'invention est particulièrement simple et utile dans le cas des polymères hydrophiles de type hydrogel.

D'autres matériaux convenables dans le cadre de la présente invention sont des caoutchoucs de silicone, notamment ceux des lentilles décrites dans la demande de brevet français FR 87 14681 déposée par la demanderesse, ou les copolymères silicone-acrylate qui sont décrits, par exemple, dans les brevets américains US 4 152 508 et US 4 330 383, ou les copolymères à base de silicone acrylate-monomère fluoré qui sont décrits par exemple dans le brevet européen 0 219 312.

Le monomère présent dans la composition d'imprégnation peut être de même type que ceux qui interviennent dans la fabrication du matériau de base de la lentille, ou de type différent. Dans les deux cas, on a intérêt à choisir un monomère qui, après durcissement de la composition où il est combiné avec le photoinitiateur, conduit à un matériau dont l'indice de réfraction est sensiblement différent de celui du matériau de base de la lentille. La lentille à élément diffractif finie doit être considérée là dans ses conditions normales d'utilisation.

En conséquence, quand il s'agit de lentilles hydrophiles, c'est à l'indice que présente le matériau à l'état hydraté, souvent différent de celui du matériau non hydraté, qu'il convient de comparer l'indice de la composition polymérisée formant le réseau diffractif, laquelle peut parfois rester elle-même hydrophobe sans nuire sensiblement aux propriétés globales de la lentille pour son utilisation en milieu oculaire.

Conformément à l'invention, on utilise de préférence un monomère à double liaison éthylénique choisi parmi : les acrylates d'alkyle et méthacrylates d'alkyle ainsi que leurs dérivés, en particulier le méthacrylate de méthyle ; les monomères vinyliques aromatiques et leurs dérivés, par exemple le styrène ; les N-vinyl-lactames et leurs dérivés, préférentiellement la N-vinylpyrrolidone ; les méthacrylates d'hydroxyalkyle tels que l'hydroéthylméthacrylate.

Quant au photoinitiateur présent avec le monomère optique dans la composition d'imprégnation, ou composition de photosensibilisation, il peut s'agir de tout composé producteur de radicaux libres sous irradiation, que ce soit par lui-même ou par coopération avec un autre composé donneur de protons.

On comprend dès lors que pour constituer ladite composition, monomère optique et photoinitiateur peuvent être dissous dans un solvant approprié, qui peut être notamment de type donneur de protons, tel qu'un alcool, un thiol ou une amine.

Cependant, conformément à un premier mode de mise en oeuvre du procédé, qui a droit à la préférence notamment dans le cas de lentilles de type rigide, il semble plus profitable d'utiliser une composition liquide exempte de solvant, où le photoinitiateur est liquide et miscible avec le monomère optique utilisé, ou solide mais soluble dans celui-ci.

Les photoinitiateurs préférés selon l'invention sont alors des composés aromatiques à fonction cétone, et il semble particulièrement avantageux d'utiliser des composés de la famille des acéto-phénones, connus pour amorcer les réactions de polymérisation par suite d'une rupture de leur molécule sous irradiation, provoquée par exemple par un arc au mercure. Parmi les composés de ce type, on peut citer le photoinitiateur désigné sous le nom commercial d'Irgacure 907, celui du nom commercial de Darocure 1173 (hydroxy-2 méthyl-2 phényl-1 propanone) et les composés de la même famille que ce dernier que sont les benzoïne-éthers, la diéthoxyacétophénone et la 2,2-méthoxy 1,2-diphényléthanone.

Dans le cadre de la présente invention,on a généralement intérêt à créer l'élément diffractif par des zones d'indice très élevé dans une lentille en polymère d'indice plus faible. Dans ce but, il semble que pour les polymères de lentilles les plus usuels, des compositions de photosensibilisation particulièrement appropriées comportent de 10 à 60%, et de préférence de 25 à 50% en poids de photoinitiateur par rapport au poids de la composition. Dans ce même contexte, le méthacrylate de méthyle (MMA) est un monomère spécialement approprié, notamment lorsqu'il est utilisé avec un photoinitiateur de la famille du Darocure (nom commercial), tels que ceux compris dans la formule générale : 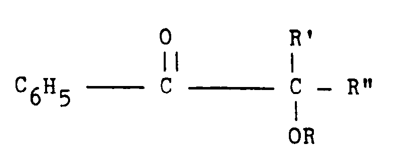
où R est H ou un radical alkyle ou aryle,
R′ et R˝ sont identiques ou différents, chacun étant H, un radical aryle, un radical alkyle, ou un groupe -OR‴ où R‴ est H ou un radical alkyle ou aryle ;
les radicaux aryle étant notamment le radical phényle et les radicaux alkyle comportant avantageusement de 1 à 5 atomes de carbone.

Une telle composition est facile à mettre en oeuvre conformément à la présente invention, par simple immersion du polymère de la lentille dans cette composition, à l'état d'un liquide fluide de sorte qu'elle pénètre sans difficulté dans le polymère.

L'irradiation de l'étape suivante peut être réalisée par toute source lumineuse émettant dans le domaine de sensibilité du photoinitiateur utilisé. Il peut s'agir notamment d'une lampe à arc au mercure, pour les compositions de photosensibilisation préférées. Pour limiter l'irradiation aux zones du réseau, on peut interposer un masque entre la source et le matériau imprégné, ou faire appel à un faisceau laser, ou à des interférences de faisceaux de lumière cohérente.

Un rinçage avec un solvant de la composition non durcie permet d'éliminer celle-ci des zones n'ayant pas été soumises à l'irradiation. En variante, on peut provoquer l'évaporation de l'excès de composition non durcie par chauffage.

Sans vouloir donner d'interprétation limitative des réactions intervenant dans le durcissement de la composition et dans sa rétention au sein du polymère de base réalisée sélectivement dans les zones irradiées, on peut supposer qu'il se produit une polymérisation de la composition suite à la réaction du photoinitiateur activé sur le monomère optique, mais il ne semble pas qu'une telle photo-polymérisation entraîne des réactions chimiques de fixation avec le polymère préalablement durci de la matrice de base, du moins dans les modes de mise en oeuvre recommandés de l'invention, étant donné que les polymères préférés pour le matériau de base de la lentille sont en général réticulés, de sorte qu'ils ne comportent plus de fonctions réactives, et que d'autre part le durcissement réalisé au sein de la matrice ne semble pas affecter sensiblement les propriétés optiques propres de cette dernière.

L'indice de réfraction de la composition durcie, ou notamment polymérisée suivant le réseau au sein de la matrice formée par le polymère de base de la lentille, détermine la loi de répartition de 1 énergie dans les différentes puissances de l'élément diffractif. Celle-ci dépend donc de la capacité du polymère de base à absorber la composition de photosensibilisation et de la nature et des proportions des constituants de cette composition.

Conformément à une autre caractéristique de l'invention, la composition comporte en outre un agent réticulant, dont la nature et la proportion sont choisies en fonction de celles du monomère optique. Sa présence semble favoriser une bonne permanence dans le temps du réseau diffractif obtenu selon l'invention.

Tout réticulant connu est utilisable dès lors qu'il est adapté au monomère optique et qu'il permet de conserver la transparence requise pour les lentilles optiques artificielles.

A titre d'exemple :
- Si le monomère optique utilisé est la N-vinylpyrolidone, on utilise préférentiellement le triallylcyanurate ou le triallylisocyanurate comme réticulant, ou les diméthacrylates d'alkoxyle dans lesquelles le motif alkoxy peut être répété de 1 à 5 fois.
   On utilise plus particulièrement un diméthacrylate de formule : 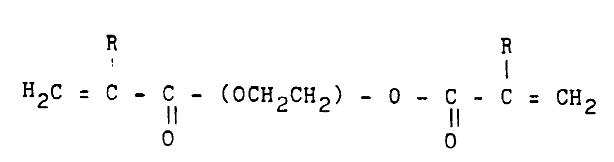 R = H, CH₃ n = 1 à 5
- Si le monomère optique est le styrène, on utilise préférentiellement le divinylbenzène comme réticulant ;
- Si le monomère optique est un méthacrylate, on utilise préférentiellement les diméthacrylates d'alkyle où la chaine alkyle peut comporter de 1 à 5 atomes de carbone.

Suivant une autre forme de réalisation de l'invention, le polymère est traité de la sorte au moyen d une composition photopolymérisable soluble dans son milieu gonflant d'utilisation et alors que le polymère est à l'état gonflé dans un tel milieu. C'est dire que les polymères constituant des lentilles selon l'invention sont de préférence des polymères hydrophiles de type hydrogels, doués d'une capacité d'absorption d'eau importante, et que la composition photopolymérisable est alors soluble dans l'eau. L'inscription du profil d'indice de réfraction au sein de l'hydrogel par le procédé de l'invention s'effectue alors directement dans l'hydrogel gonflé par l'eau, en imprégnant l'hydrogel à saturation par une solution aqueuse du monomère et d'un photo-initiateur soluble dans l'eau.

La présente invention propose donc également un procédé de fabrication d'une lentille optique à modulation d'indice de réfraction, caractérisé en ce que, partant d'une lentille de polymère hydrophile transparent de type hydrogel, préalablement mise en forme, on imprègne cette lentille d'une composition photopolymérisable comportant au moins un monomère et un photo-initiateur en solution dans l'eau, on soumet la lentille imprégnée à une irradiation modulée localement en intensité et/ou temps d'irradiation, provoquant une polymérisation sélective locale du monomère, puis on élimine l'excédent de photo-initiateur et monomère non polymérisé par extraction à l'eau.

En conséquence, suivant ce prodédé, la lentille traitée ne se trouve jamais gonflée par un solvant non aqueux, ni asséchée entre les étapes successives du procédé. De plus, on a pu constater que les hydrogels pour lentilles à utiliser en milieu ophtalmique, tels que les hydrogels à base de méthacrylate de méthyle (MMA) et vinylpyrrolidone (NVP), ou d'hydroxyéthyl méthacrylate et de vinylpyrrolidone (HEMA/NVP), ou encore des hydrogels de polyhydroxyéthyl méthacrylate, présentent un réseau macromoléculaire spécifique, qui est très favorable à la bonne répartition et à la stabilité d'un réseau polymère interpénétré formé en son sein par le procédé de modulation d'indice.

Dans une forme avantageuse de mise en oeuvre pratique du procédé, la première étape consiste à immerger l'hydrogel déjà hydraté dans une solution aqueuse de la composition photopolymérisable pour gonfler le polymère par cette solution en déplaçant l'eau pure qu'il enferme. Cependant, on peut aussi partir d'un hydrogel sec, que l'on sature alors directement par la solution aqueuse de traitement. En général, les polymères hydrophiles utilisés pour constituer l'hydrogel de base ont des capacités d'absorption d'eau de 30 % à 80 % en volume.

Conformément au procédé de l'invention mis en oeuvre sur un hydrogel, on utilise avantageusement comme monomères les méthacrylates d'alkyle ou d'hydroxyalkyle tels que le méthacrylate de méthyle ou l'hydroxyéthyl méthacrylate. On peut cependant utiliser également tout autre monomère des types précédemment définis. Il présentent des degrés de solubilité dans l'eau très variables, et parfois faible, comme dans le cas du méthacrylate de méthyle. Mais les lentille de type hydrogel, de par leur nature, sont capables de concentrer le monomère en leur sein durant l'imprégnation, de sorte que l'on pourra atteindre les concentrations requises en utilisant une quantité suffisante de composition photo-polymérisable, reconstituée périodiquement. En alternative, on peut introduire sur les monomères peu ou très peu solubles des groupements qui vont les rendre hydrosolubles sans pour autant altérer leurs autres propriétés. Ainsi, par exemple, à la place du styrène, on peut avantageusement utiliser l'acide styrène sulfonique.

Il est remarquable que la lentille ne se trouve pas déformée par le traitement de l'invention, malgré ce que l'on aurait pu attendre par exemple de la part de molécules de polyméthacrylate de méthyle, hydrophobes, emprisonnées dans une matrice hydrophile, ou de la part de zones de polyHEMA, hydrophiles mais à taux de gonflement de 40 %, dans une matrice MMA/NVP à taux de gonflement de 70 %. Un tel monomère est de préférence complété par un réticulant tel qu'un acrylate difonctionnel, ou plus particulièrement un diméthacrylate d'alkyle où la chaîne alkyle peut comporter de 1 à 5 atomes de carbone.

Quant au photoinitiateur présent avec le monomère de modulation dans la composition d'imprégnation, ou composition de photosensibilisation, il peut s'agir de tout composé producteur de radicaux libres sous irradiation, que ce soit par lui-même ou par coopération avec un autre composé donneur de protons. C'est dire que les photo-initiateurs utilisés, ou amorceurs de photo-polymérisation, peuvent être aussi bien de type photoclivables que de type photoactivables, avec toutefois une préférence pour ceux qui sont actifs pour amorcer la photopolymérisation du monomère pour des longueurs d'onde d'irradiation se situant dans le domaine du visible, ou du proche UV.

Un photo-initiateur photoclivable comporte un ou plusieurs composés qui fonctionnent en générant directement un ou plusieurs radicaux libres amorceurs de polymérisation, tandis qu'un photo-initiateur photoactivable est formé d'un système produisant de tels radicaux par une réaction d'oxydoréduction photo-assistée entre un composé absorbeur de lumière et un donneur d'hydrogène ou d'électrons tous deux présents dans le système. Bien entendu, on peut également utiliser des mélanges des deux types de photo-initiateurs.

Des exemples de composés photoclivables connus en soi sont choisis parmi les dérivés d'alcoxyacétophénone, éthers de benzoine, phosphine-oxydes, dérivés de benzoyl oxime. Des exemples de photoinitiateurs photoactivables connus comprennent un absorbeur producteur de radicaux libres choisi parmi les benzophénones, benzyles, xanthones, anthrones, thioxanthones, fluorénones, subérones, acridones, en association avec, comme donneur de protons, un composé du type des éthers, alcools, amines, aminoacides, ou composés organométalliques. On pourra notamment utiliser les photoinitiateurs constitués par des thioxanthones portant un radical ionique tels que ceux de la famille décrite dans le brevet américain US 4 791 213, dont le maximum d'absorption se situe dans la gamme de 390 à 405 nanomètres.

Des photoinitiateurs préférés pour la modulation d'indice d'hydrogels sont les sels de thioxanthones et benzophénone porteuse d'un radical alkylamine ou oxyalkylamine.

Dans une forme avantageuse de mise en oeuvre pratique du procédé, la première étape consiste à immerger l'hydrogel déjà hydraté dans une solution aqueuse de la composition photopolymérisable pour gonfler le polymère par cette solution en déplaçant l'eau pure qu'il enferme. Des photo-initiateurs actifs en faible concentration sont préférés pour cela, car ils permettent d'éviter une variation de l'indice modulé dans l'épaisseur de la lentille, d'où la préférence donnée suivant l'invention à des mélanges photo-activables où le photo-initiateur proprement dit est associé à un composé donneur de protons.

On évite ainsi l'apparition non souhaitable d'un gradient d'indice en fonction de la profondeur d'irradiation. Suivant l'invention, ce gradient reste dans les limites d'une variation acceptable de 10 à 20 %. La concentration en photoinitiateur dans la solution d'imprégnation est avantageusement comprise entre 10⁻⁵ M et 0,5 M, et notamment de l'ordre de 10⁻² à 10⁻⁴ M.

L'invention permet en particulier, par impression du polymère gonflé par la solution aqueuse de monomère et photo-initiateur à travers un masque à raies concentriques appropriées, puis développement à l'eau, de réaliser dans une lentille de contact préformée à sa forme définitive, un réseau diffractif convenant pour pallier la presbytie, sans provoquer d'altération physiques gênantes de la lentille, ne serait-ce qu'en surface. Ceci peut se faire sans perturber le fonctionnement normal d'additifs tels que les agents anti-UV sur les colorants. On peut d'autre part contrôler la modulation d'indice de façon homogène dans l'épaisseur et ajuster l'énergie diffractée dans la puissance souhaitée.

Le traitement pour ce faire comporte un faible nombre d'étapes et il est simple à mettre en oeuvre. Les raies d'indices différents sont constituées au sein de la matrice sans se traduire par des traits en déformation de la surface, les surépaisseurs éventuelles n'étant guère que de l'ordre de 1 à 2 microns. Les raies sont bien délimitées et restent telles dans le temps. Leur finesse peut varier en général de 500 µm à 10 µm.

En général, les lentilles de contact à traiter ont une épaisseur comprise entre 100 et 500 microns, mais cette épaisseur varie de l'axe à la périphérie. Le rayon de courbure de la lentille gonflée dans sa forme d'emploi est en général de l'ordre de 6 à 10 pour la face avant et de l'ordre de 7 à 9 pour la face arrière.

Pour un diamètre total de la lentille de 10 mm environ, le réseau diffractif obtenu suivant l'invention occupe la zone centrale, sur un diamètre de l'ordre de 4 à 6 mm, avec une profondeur s'étendant à toute l'épaisseur de la lentille, donc de l'ordre 200 µm au centre et de l'ordre de 300 à 400 µm en bord de la zone. Les raies concentriques sont écartées de 0,5 à 1 mm au centre et se rapprochent progressivement quand on s'éloigne radialement du centre pour atteindre un écartement de 50 à 100 µm en bord de zone.

On décrira maintenant l'invention plus en détails dans le cadre d'exemples particuliers de mise en oeuvre qui ne sont nullement limitatifs.

### EXEMPLE I

Une rondelle en hydrogel constitué d'un copolymère de méthacrylate de méthyle (MMA) et de vinylpyrrolidone (NVP), préalablement soumise à un traitement d'extraction par le tétrahydrofuranne pour éliminer les oligomères, est immergée pendant 1 heure dans une composition comprenant 75 parties en poids de méthacrylate de méthyle et 25 parties en poids de hydroxy-2 méthyl-2 phényl-1 propanone (produit commercial Darocure 1173). Le copolymère utilisé correspond au matériau pour lentilles de contact connu sous la dénomination commerciale Lunelle (marque déposée).

Le produit gonflé obtenu est insolé à l'aide d'une source UV (lampe à arc au mercure de 100 Watts) pendant 5 minutes, à travers un masque à la forme du réseau à créer.

L'échantillon est ensuite immergé dans l'éthanol pendant une nuit. Ce traitement fait apparaître l'élément diffractif. Le produit final est conservé immergé dans l'eau ou le sérum physiologique.

### EXEMPLE II

Une lentille en hydrogel de type Lunelle (marque déposée) est gonflée par un mélange comprenant 60 parties en poids de méthacrylate de méthyle, 20 parties en poids de diméthylacrylate de triéthylène-glycol et 20 parties en poids de Darocure 1173 (nom commercial). Elle est ensuite insolée puis lavée à l'éthanol comme dans l'exemple I.

L'élément diffractif obtenu est très stable dans le temps.

### EXEMPLE III

Une lentille en hydrogel de type Lunelle (marque déposée) est gonflée pendant 3 heures dans un mélange comprenant 60 parties en poids de N-vinylpyrrolidone, 15 parties en poids de triallyl-iso-cyanurate et 25 parties en poids de Darocure 1173 (nom commercial). Elle est ensuite insolée à travers un masque pendant 1 minute puis lavée à l'éthanol. L'élément diffractif reste visible après hydratation.

### EXEMPLE IV

Une lentille en silicone est immergée pendant 1 heure dans un mélange comprenant 60 parties en poids de MMA, 15 parties en poids de diméthylacrylate de triéthylène-glycol et 25 parties en poids de Darocure 1173 (nom commercial). Elle est ensuite insolée puis lavée à l'éthanol comme dans l'exemple I.

### EXEMPLE V

On procède dans les mêmes conditions que dans les exemples précédents sur des lentilles rigides perméables en silicone-acrylate, au moyen d'un mélange comprenant 60 parties en poids de méthacrylate de méthyle, 15 parties en poids de diméthacrylate de triéthylène-glycol et 25 parties en poids de Darocure 1173 (nom commercial).

### EXEMPLE VI

On procède dans les mêmes conditions que dans les exemples précédents sur les lentilles rigides perméables en silicone-acrylate-monomère fluoré au moyen :
1) d'un mélange comprenant 60 parties en poids de méthacrylate de méthyle, 15 parties en poids de diméthacrylate de triéthylène-glycol et 25 parties en poids de Darocure 1173 (nom commercial) ;
2) ou d'une solution comprenant 75 parties en poids de méthacrylate de méthyle et 25 partie en poids de Darocure 1173 (nom commercial).

Dans cet exemple comme dans les précédents, les surépaisseurs éventuelles en surface des lentilles ne dépassent pas 4 à 5 µm et elles sont suffisamment arrondies pour ne pas être gênantes.

Il ressort notamment des exemples précédents qu'un temps d'irradiation compris entre 0,5 et 10 minutes, et plus particulièrement de l'ordre de 1 à 5 minutes est en général approprié.

### EXEMPLE VII :

Dans cet exemple et dans les suivants, on applique le procédé en milieu aqueux, sur des hydrogels, en utilisant un système photoinitiateur hydrosoluble.

Le polymère de base est un copolymère de méthacrylate de méthyle et N-vinylpyrrolidone (MMA-NVP) du type commercialisé par ESSILOR sous la marque LUNELLE. Il se présente en échantillons semi-finis, sous la forme de lentilles optiques de 13 à 14 mm de diamètre.

La base photopolymérisable d'imprégnation est constituée d'un mélange d'hydroxyéthyl méthacrylate (HEMA) et d'un réticulant acrylate difonctionnel : le diméthylméthacrylate d'éthylène glycol (DMEG), en solution dans l'eau distillée.

Le système photo-initiateur est constitué d'une thioxanthone hydrosoluble, commercialisée par International Biosynthetics sous le nom de QUANTACURE (QTX), absorbant à 405 nm dans l'eau de formule : 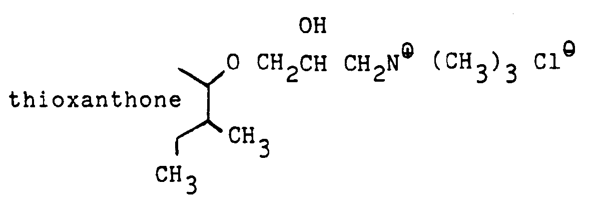
et d'une amine tertiaire, la méthyl diéthanolamine (MDEA).

La composition aqueuse d'imprégnation est formée du mélange de la base polymérisable et du système photo-initiateur. Les plages de concentration utilisées sont dans les limites suivantes :
Concentration en QTX : 10⁻⁵ M à 0,5 M
Concentration en MDEA supérieure à 1,7 x 10⁻²M
Concentration en HEMA comprise entre 0,6 M et 1M
Concentration en DMEG de l'ordre de 10⁻² M

Le système d'irradiation est constitué d'une lampe à arc de mercure haute pression présentant une puissance de 100 W, collimatée par une lentille de 200 mm de distance focale. La densité de flux mesurée pour les raies d'émission à 405-408 nm vaut 0,75 mW/cm² au niveau de l'échantillon de polymère. On sélectionne au niveau de la lampe les raies visibles du mercure.

La lentille de départ peut être sèche ou hydratée à saturation d'eau. Elle est mise à gonfler par immersion dans la composition comprenant le photo-initiateur et la base polymérisable pendant au moins 30 minutes à température ambiante. Elle est ensuite sortie de cette solution et soumise aussitôt au traitement d'irradiation, puis immergée à nouveau, mais dans de l'eau distillée pure, jusqu'à extraire l'excès de réactifs non irradiés ou insuffisamment irradiés par déplacement des espèces restant solubles.

Pour les concentrations suivantes :
QTX = 10⁻⁴ M
MDEA = 1,8 x 10⁻² M
HEMA = 0,7 M
DMEG = 10⁻²M
on obtient, après 3 minutes d'insolation, une variation d'indice de 5 x 10⁻³ pour une lentille de 200 µm d'épaisseur et une résolution d'au moins 20 µm.

Cette modulation d'indice permet, entre autres, de réaliser des lentilles diffractives kinoformes bifocales par variation d'indice.

Pour les concentrations suivantes :
QTX = 5 x 10⁻⁴ M
MDEA = 1,8 x 10⁻² M
HEMA = 0,7 M
DMEG = 10⁻² M
on obtient après 3 minutes d'insolation une variation de 8 x 10⁻³M pour une lentille de 200 µm d'épaisseur.

Pour les concentrations suivantes :
QTX = 10⁻³ M
MDEA = 1,8 x 10⁻² M
HEMA = 0,7 M
DMEG = 10⁻² M
on obtient après 3 minutes d'insolation une variation d'indice de 10⁻² pour une lentille de 200 µm d'épaisseur.

Soumises à des tests de vieillissement dans le sérum physiologique à 60 °C pendant un mois, les lentilles ont conservé une efficacité de diffraction inchangée. Elles ne contiennent pas de HEMA monomère susceptible de modifier les propriétés de la lentille par durcissement thermique.

### EXEMPLE VIII :

On remplace le QTX par une autre thioxanthone qui a pour formule :

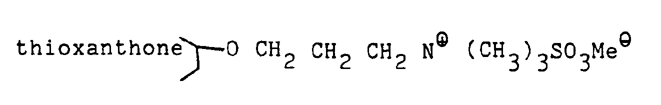

Pour des concentrations identiques à celles citées dans l'exemple 1, les résultats sont comparables.

### EXEMPLE IX :

On remplace la thioxanthone par une benzophénone hydrosoluble, connue sous la dénomination QUANTACURE BTC et développée par International Biosynthetics, présentant la formule suivante :

benzophénone―para- CH₂N^{⊕} (CH₃) Cl^{⊖}

L'irradiation se fait dans l'UV à 365 nm, correspondant au domaine de sensibilité de la thioxanthone.

On réalise la photopolymérisation en utilisant, pour imprégner le polymère de base, un mélange présentant les concentrations suivantes :
QTXBTC 4736 = 10⁻³ M
MDEA = 1,8 x 10⁻² M
HEMA = 0,7 M
DMEG = 10⁻² M

### EXEMPLE X :

On utilise à la place de la méthyl diéthanolamine, la triéthanolamine (TEA). Le mélange de sensibilisation a la composition suivante, exprimée en concentration des constituants dans l'eau :
QTX = 10⁻³ M
TEA = 10⁻² M
HEMA = 0,7 M
DMEG = 10⁻² M

On obtient une photopolymérisation qui permet de réaliser une lentille diffractive.

### EXEMPLE XI :

On utilise la méthyl diéthanolamine et on remplace le QTX par une autre thioxanthone, développée par International Biosynthetics sous la dénomination QUANTACURE ABC, qui présente la formule :

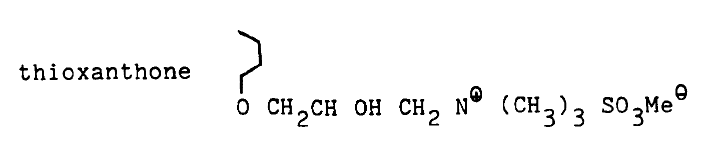

Pour 3 minutes d'insolation on obtient une modulation d'indice de 7,5 x 10⁻³ pour les concentrations suivantes :
Quantacure ABC 4782 = 10⁻³ M
MDEA = 1,8 x 10⁻² M
HEMA = 0,7 M
DMEG = 10⁻² M

Dans les exemples ci-dessus portant sur des hydrogels, les surépaisseurs éventuelles en surface des lentilles ne dépassent pas 1 à 2 µm. Les variations d'indice obtenues sont de l'ordre de 10⁻² à 10⁻³. Elles dépendent notamment de la composition des solutions photo-polymérisables, pour des temps d'irradiation compris entre 0,5 et 10 minutes, et plus particulièrement de l'ordre de 1 à 5 minutes.

Mais naturellement, l'invention n'est en rien limitée par les particularités qui ont été spécifiées dans les exemples qui précèdent ou par les détails des modes de mise en oeuvre particuliers choisis pour illustrer l'invention. Toutes sortes de variantes peuvent être apportées aux conditions opératoires de même qu'à la nature et aux proportions des constituants et réactifs sans sortir pour autant du cadre de l'invention définie par la revendication 1.

## Revendications

1. Procédé de fabrication d'une lentille optique à modulation d'indice de réfraction, dans lequel:
- on imprègne une matrice en un matériau polymère préformée par polymérisation dudit matériau au moyen d'une composition liquide photopolymérisable comportant un monomère et un photoinitiateur de polymérisation sous irradiation ;
- on soumet le matériau ainsi imprégné à une irradiation locale variable en puissance et/ou temps d'exposition, pour polymériser ladite composition localement suivant la modulation à obtenir,
- puis on élimine du matériau l'excès de composition non polymérisée.

2. Procédé suivant la revendication 1, caractérisé en ce que ladite matrice est en forme de lentille ophtalmique et en ce que l'irradiation s'effectue selon un réseau correspondant à un élément diffractif à former au sein de la lentille.

3. Procédé suivant la revendication 1 ou 2, caractérisé en ce que ladite matrice est en un matériau polymère de lentille de contact, constitué par un polymère ou copolymère transparent obtenu à partir d'une composition comportant au moins un monomère choisi parmi les acrylates ou méthacrylates d'alkyle, les lactames insaturés, les acrylates ou méthacrylates d'hydroxyalkyle et l'acide méthacrylique.

4. Procédé suivant la revendication 3, caractérisé en ce que ledit matériau est un polymère ou copolymère obtenu à partir d'une composition comportant au moins un monomère choisi parmi le méthacrylate de méthyle, la N-vinylpyrrolidone et le méthacrylate d'hydroxy-éthyle.

5. Procédé suivant l'une quelconque des revendications précédentes, caractérisé en ce que ladite matrice est à base d'un polymère de lentille rigide et en ce que la composition d'imprégnation est une solution de photoinitiateur et de monomère photopolymérisable exempte d'autre solvant organique.

6. Procédé suivant l'une quelconque des revendications 1 à 4, caractérisé en ce que ladite matrice est un polymère hydrophile transparent de type hydrogel, préalablement mise en forme de lentille, en ce que la composition d'imprégnation est constituée de monomère et photo-initiateur en solution dans l'eau, et en ce que, après irradiation provoquant une polymérisation sélective locale du monomère, on élimine l'excédent de photo-initiateur et monomère non polymériséee par extraction à l'eau.

7. Procédé suivant l'une quelconque des revendications précédentes, caractérisé en ce que ledit monomère est un monomère à double liaison éthylénique choisi parmi les acrylates d'alkyle et méthacrylates d'alkyle ainsi que leurs dérivés, notamment leurs dérivés hydroxylés, les monomères vinyliques aromatiques et leurs dérivés, et les N-vinyl-lactames et leurs dérivés.

8. Procédé suivant l'une quelconque des revendications précédentes, caractérisé en ce que ledit monomère est le méthacrylate de méthyle ou l'hydroxyéthylméthacrylate.

9. Procédé suivant l'une quelconque des revendications 1 à 8, caractérisé en ce que ladite composition comporte en outre un agent réticulant dudit monomère.

10. Procédé suivant la revendication 9, caractérisé en ce que ledit réticulant est choisi parmi le triallylcyanurate ou le triallylisocyanurate, le divinylbenzène, et les diméthacrylates de formule : 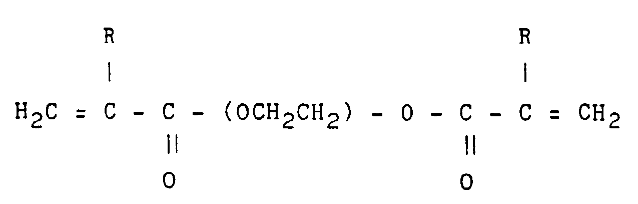 R = H, CH₃ n = 1 à 5

11. Procédé suivant l'une quelconque des revendications précédentes, caractérisé en ce que ledit photoinitiateur est du type de l'hydroxy-2 méthyl-2 phényl-1 propanone.

12. Procédé suivant l'une quelconque des revendications précédentes, caractérisé en ce que ladite composition comporte de 10 à 60%, et de préférence de 25 à 50% en poids de photo-initiateur par rapport au poids de la composition.

13. Procédé suivant l'une quelconque des revendications précédentes, caractérisé en ce que l'irradiation est effectuée sous une longueur d'onde du domaine visible.

14. Procédé suivant l'une quelconque des revendications précédentes, caractérisé en ce que le photoinitiateur comprend un composé photosensible de la famille des thioxanthones ou benzophénones.

15. Procédé suivant l'une quelconque des revendications précédentes, caractérisé en ce que la solution d'imprégnation comporte un activateur de décomposition photosensible du photoinitiateur de polymérisation.

16. Procédé suivant l'une quelconque des revendications précédentes, appliqué à une matrice en hydrogel, caractérisé en ce que la composition d'imprégnation est une solution aqueuse de photoinitiateur, de préférence associé à un activateur, et de monomère combiné de préférence avec un agent réticulant, dans laquelle la concentration en photoinitiateur est comprise entre 10⁻⁵ M et 0,5 M.

17. Procédé suivant la revendication 16, caractérisé en ce que la concentration de la solution d'imprégnation en photoinitiateur est de l'ordre de 10⁻² M à 10⁻⁴ M.

18. Procédé suivant la revendication 16 ou 17, caractérisé en ce que le polymère de la matrice est un hydrogel à base de méthadrylate de méthyle ou hydroxyéthylméthacrylate réticulé par un monomère plurifonctionnel.

## Patentansprüche

1. Verfahren zur Herstellung einer optischen Linse mit moduliertem Brechungsindex, wobei man:
- eine Matrix aus einem Polymermaterial, die durch polymerisation des erwähnten Materials vorgebildet worden ist, mit einer flüssigen, photopolymerisierbaren Zusammensetzung imprägniert, welche ein Monomer und einen unter Bestrahlung wirkenden Polymerisations-Photoinitiator umfaßt;
- das so imprägnierte Material einer lokalen Bestrahlung mit variabler Stärke und/oder Bestrahlungszeit unterwirft, um die erwähnte Zusammensetzung lokal entsprechend der zu erzielenden Modulation zu polymerisieren;
- anschließend überschüssige nicht-polymerisierte Zusammensetzung entfernt.

2. Verfahren nach Anspruch 1, **dadurch gekennzeichnet**, daß die erwähnte Matrix in Form einer ophthalmischen Linse vorliegt und daß die Bestrahlung gemäß einem Netzwerk erfolgt, das einem innerhalb der Linse zu bildenden Diffraktionselement entspricht.

3. Verfahren nach Anspruch 1 oder 2, **dadurch gekennzeichnet**, daß die erwähnte Matrix aus einem polymermaterial für eine Kontaktlinse ist, die aus einem transparenten Polymer oder Copolymer gebildet ist, das ausgehend von einer Zusammensetzung erhalten worden ist, welche wenigstens ein Monomer umfaßt, das ausgewählt ist unter Alkylacrylaten oder- methacrylaten, ungesättigten Lactamen, Hydroxyalkylacrylaten oder- methacrylaten und Methacrylsäure.

4. Verfahren nach Anspruch 3, **dadurch gekennzeichnet**, daß das erwähnte Material ein Polymer oder Copolymer ist, das ausgehend von einer Zusammensetzung erhalten worden ist, die wenigstens ein Monomer umfaßt, das ausgewählt ist unter Methylmethacrylat, N-Vinylpyrrolidon und Hydroxyäthylmethacrylat.

5. Verfahren nach einem der vorhergehenden Ansprüche, **dadurch gekennzeichnet**, daß die erwähnte Matrix auf einem Polymer für eine steife Linse basiert und daß die Imprägnationszusammensetzung eine Lösung des photoinitiators und des photopolymerisierbaren Monomers ohne ein anderes organisches Lösungsmittel ist.

6. Verfahren nach einem der Ansprüche 1 bis 4,
**dadurch gekennzeichnet**, daß die erwähnte Matrix ein transparentes, hydrophiles Polymer vom Hydrogel-Typ ist, das vorher in die Form einer Linse gebracht worden ist, daß die Imprägnationszusammensetzung aus dem Monomer und dem Photoinitiator in Lösung in Wasser gebildet ist und daß man nach dem Bestrahlen, das eine selektive lokale Polymerisation des Monomers bewirkt, den Überschuß an Photoinitiator und an nicht-polymerisiertem Monomer durch Extraktion mit Wasser entfernt.

7. Verfahren nach einem der vorhergehenden Ansprüche, **dadurch gekennzeichnet**, daß das erwähnte Monomer ein Monomer mit einer äthylenischen Doppelbindung ist, das ausgewählt ist unter Alkylacrylaten und Alkylmethacrylaten sowie ihren Derivaten, insbesondere ihren hydroxylierten Derivaten, aromatischen Vinylmonomeren und ihren Derivaten und N-Vinyllactamen und ihren Derivaten.

8. Verfahren nach einem der vorhergehenden Ansprüche, **dadurch gekennzeichnet**, daß es sich bei dem Monomer um Methylmethacrylat oder Hydroxyethylmethacrylat handelt.

9. Verfahren nach einem der Ansprüche 1 bis 8,
**dadurch gekennzeichnet**, daß die erwähnte Zusammensetzung außerdem ein Vernetzungsmittel für das erwähnte Monomer umfaßt.

10. Verfahren nach Anspruch 9,
**dadurch gekennzeichnet**, daß das erwähnte Vernetzungsmittel ausgewählt ist unter Triallylcyanurat oder Triallylisocyanurat, Divinylbenzol und Dimethacrylaten der Formel: 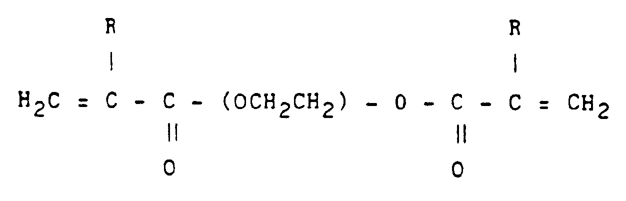 R = H, CH₃ n = 1 bis 5

11. Verfahren nach einem der vorhergehenden Ansprüche, **dadurch gekennzeichnet**, daß der erwähnte Photoinitiator vom 2-Hydroxy-2-methyl-1-phenyl-propanon-Typ ist.

12. Verfahren nach einem der vorhergehenden Ansprüche, **dadurch gekennzeichnet**, daß die erwähnte Zusammensetzung 10 - 60 Gew.% und vorzugsweise 25 - 50 Gew. % Photoinitiator, bezogen auf das Gewicht der Zusammensetzung, enthält.

13. Verfahren nach einem der vorhergehenden Ansprüche, **dadurch gekennzeichnet**, daß die Bestrahlung mit einer im sichtbaren Bereich liegenden Wellenlänge erfolgt.

14. Verfahren nach einem der vorhergehenden Ansprüche, **dadurch gekennzeichnet**, daß der Photoinitiator eine photosensitive Verbindung aus der Familie der Thioxanthone oder Benzophenone umfaßt.

15. Verfahren nach einem der vorhergehenden Ansprüche, **dadurch gekennzeichnet**, daß die Imprägnationslösung einen Aktivator für den photosensitiven Abbau des Polymerisations-Photoinitiators enthält.

16. Verfahren nach einem der vorhergehenden Ansprüche zur Anwendung bei einer Hydrogelmatrix, **dadurch gekennzeichnet**, daß die Imprägnationszusammensetzung eine wässrige Lösung des Photoinitiators, vorzugsweise zusammen mit einem Aktivator, und des Monomers, vorzugsweise kombiniert mit einem Vernetzungsmittel, ist, wobei die Konzentration an Photoinitiator zwischen 10⁻⁵ M und 0,5 M liegt.

17. Verfahren nach Anspruch 16, **dadurch gekennzeichnet**, daß die Konzentration an Photoinitiator in der Imprägnationslösung in der Größenordnung von 10⁻² M bis 10⁻⁴ M liegt.

18. Verfahren nach Anspruch 16 oder 17,
**dadurch gekennzeichnet**, daß das Polymer der Matrix ein Hydrogel ist auf Basis von Methylmethacrylat oder Hydroxyethylmethacrylat, das mit einem multifunktionellen Monomer vernetzt ist.

## Claims

1. Method of manufacture of an optical lens providing refractive index modulation, wherein :
- a matrix of a polymer material preformed through polymerization of said material is impregated by means of a photopolymerizable liquid composition containing a monomer and a photoinitiator for causing polymerization of said composition under the action of irradiation ;
- the material thus impregnated is subjected to local irradiation which is variable in power and/or exposure time in order to polymerize said composition locally according to the modulation to be obtained,
- the excess quantity of non-hardened composition is then removed from the material.

2. Method according to claim 1, wherein said matrix is in the form of an ophtalmic lens and said irradiation takes place in accordance with a network corresponding to a diffraction element to be formed within the lens.

3. Method according to claim 1 or 2, wherein said matrix is made of a polymer material for contact-lenses constituted by a transparent polymer or copolymer obtained from a composition containing at least one monomer selected from alkyl acrylates or methacrylates, unsaturated lactams, hydroxyalkyl acrylates or methacrylates and methacrylic acid.

4. Method according to claim 3, wherein said material is a polymer or copolymer obtained from a composition containing at least one monomer selected from methyl methacrylate, N-vinyl-pyrrolidone and hydroxyethyl methacrylate.

5. Method according to any one of the preceding claims, wherein said matrix is based on a polymer for rigid lenses and the impregnation composition is a photoinitiator and photopolymerizable-monomer solution which is free from any other organic solvent.

6. Method according to any one of claims 1 to 4, wherein said matrix is a transparent hydrophilic polymer of the hydrogel type which has previously been shaped to form a lens, the impregnation composition is constituted by monomer and photoinitiator in solution in water, and after irradiation causing local selective polymerization of the monomer, the excess quantity of photoinitiator and non-polymerized monomer is removed by extraction with water.

7. Method according to any one of the preceding claims, wherein said monomer is a double ethylene bond monomer selected from alkyl acrylates and alkyl methacrylates as well as their derivatives, in particular their hydroxylated derivatives, aromatic vinyl monomers and their derivatives and the N-vinyl-lactams and their derivatives.

8. Method according to any one of the preceding claims, wherein said monomer is methyl methacrylate or hydroxyethylmethacrylate.

9. Method according to any one of claims 1 to 8, wherein said composition contains in addition a crosslinking agent for said monomer.

10. Method according to claim 9, wherein said crosslinking agent is selected from triallylcyanurate or triallylisocyanurate, divinylbenzene and dimethacrylates having the formula : 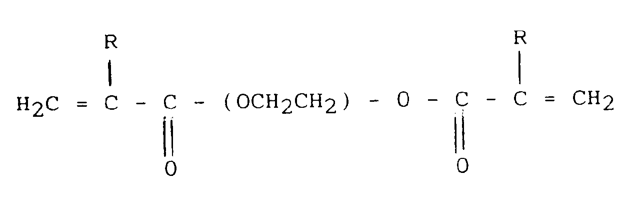 R = H, CH₃ n = 1 to 5

11. Method according to any one of the preceding claims, wherein said photoinitiator is of the hydroxy-2 methyl-2 phenyl-1 propanone type.

12. Method according to any one of the preceding claims, wherein said composition contains 10 to 60 % and preferably 25 to 50 % by weight of photoinitiator with respect to the weight of the composition.

13. Method according to any one of the preceding claims, wherein irradiation is carried out at a wavelength in the visible range.

14. Method according to any one of the preceding claims, wherein the photoinitiator contains a photosensitive compound of the family of thioxanthones or benzophenones.

15. Method according to any one of the preceding claims, wherein the impregnation solution contains an activator for photosensitive decomposition of the polymerization photoinitiator.

16. Method according to any one of the preceding claims applied to a hydrogel matrix, wherein the impregnation composition is an aqueous solution of photoinitiator, preferably associated with an activator, and of monomer preferably combined with a cross-linking agent, in which the concentration of photoinitiator is within the range of 10⁻⁵ M to 0.5 M.

17. Method according to claim 16, wherein the concentration of photoinitiator in the impregnation solution is of the order of 10⁻² M to 10⁻⁴ M.

18. Method according to claim 16 or 17, wherein the polymer of the matrix is a hydrogel based on methyl methacrylate or hydroxyethyl-methacrylate cross-linking by a plurifunctional monomer.
